Europäisches Patentamt

European Patent Office

Office européen des brevets

(19)

(11) Publication number: **0 010 529**
**B1**

(12) **EUROPEAN PATENT SPECIFICATION**

(45) Date of publication of patent specification: 05.05.82

(21) Application number: 79850088.0

(22) Date of filing: 25.09.79

(51) Int. Cl.³: **F 16 B 12/38,** F 16 B 7/00 //A47B53/02

(54) Frame structure comprising main beams and transverse beams and method of mounting such structure.

(30) Priority: 20.10.78 SE 7810950
20.10.78 SE 7810951
29.08.79 SE 7907186

(43) Date of publication of application:
30.04.80 Bulletin 80/9

(45) Publication of the grant of the patent:
05.05.82 Bulletin 82/18

(84) Designated Contracting States:
AT BE CH DE FR GB NL

(56) References cited:
FR - A - 2 305 951
GB - A - 972 874
GB - A - 1 507 136
US - A - 3 746 379

(73) Proprietor: AKTIEBOLAGET ELECTROLUX
Luxbacken 1
S-105 45 Stockholm (SE)

(72) Inventor: Andersson, Ingvar Karl-Henrik
Tegnergatan 16
S-661 00 Säffle (SE)

(74) Representative: Hagelbäck, Evert Isidor
c/o AB Electrolux Patentavdelningen
S-105 45 Stockholm (SE)

Courier Press, Leamington Spa, England.

## Frame structure comprising main beams and transverse beams and method of mounting such structure

This invention relates to a frame structure comprising profiled horizontal main beams and transverse beams, preferably of metal, the wall thickness of the beams being such that the beams are capable of taking up and transmitting considerable loads, such as loads originating from shelves supported on the frame, the transverse beams being secured to the main beams mainly by snap action, each main beam having a mainly vertical leg which has a number of spaced apart slots extending perpendicular to the length direction of the beam and each being intended to receive a respective hook on the ends of the transverse beams.

It is previously known to build up load-bearing frame structures or the like by joining main beams and transverse beams by weld, rivet or screw joints. For instance such structures are used in carriages in storage systems of the so-called compact type. These carriages are movable on rails and support shelves, compartments or the like on which goods may be stored. By moving the carriages to different positions adjacent each other or spaced from each other one can form passageways between adjacent shelves. The systems are very space-saving and have therefore become widely used. However, the known systems have the drawback that the carriages are expensive to manufacture because joining of the beams is time-consuming. In order to get a rational manufacturing of the system in spite of this the joining operation usually is concentrated to one single place in a large geographic area on which large investment in the form of automatic spot-welding machines, assembly lines and so on is made. However, this kind of rationalizing effect is partly decreased by the heavy transport charges following on the low weight-volume relation for the carriages.

U.S. patent No. 3,746,379 describes a locking connection for a supporting grid system having horizontal main beams which are provided with vertical slots, each one taking up the end of a transverse beam. The end consists of a vertical tongue having a spring finger which is forced through the slot in order to lock the transverse beam to the main beam. However, this type of arrangement gives a very weak connection since too great forces in the length direction of the main beam cannot be taken up by the transverse beams but would cause the transverse beams to fold about their vertical abutting line. This could not be allowed for the type of shelves described above.

British patent No. 972,874 describes a frame being used for compact shelves. This frame is used as a support for the carriage and is placed directly on the floor. Consequently, in this type of arrangement there is no need for connecting the longitudinal and transverse beams to each other so that forces could be transmitted in all directions from one beam to the other. Instead the beams are secured to one another very loosely by bending a tongue on one beam which has been passed through a slot in the other beam.

The purpose of this invention is to achieve a frame structure, for instance a carriage, of the type described above, which by a particular design of the beams can be simply and rapidly assembled, the beam joints being such that self-locking is achieved. Since no expensive tools are necessary for the mounting operation, this can be done more locally than before. This means that the beams can be stowed together and be transported directly from a factory to an area whereby they are to be assembled, without involving too high transportation costs.

The invention also gives the possiblity of reducing the storing costs for the carriages since the system is very flexible. Thus, carriages of suitable length and width can be built up from a few standardized components. An upper limit of the length of the carriages with respect to the space available is often set in systems of the described type. This adjustment of the length is very simple to make when using this invention and it is realized by cutting the main beams from their standard lengths to the lengths in question.

The advantages described are achieved in a frame structure according to the invention which is mainly characterized in that the leg at least partly abuts one end of the respective transverse beam, each transverse beam being provided at both ends with locking means supplementary to said hooks, and each main beam having snap-acting clamping means which is a part of the beam and which co-operate with the locking means after having been resiliently deflected by the transverse beam during mounting thereof.

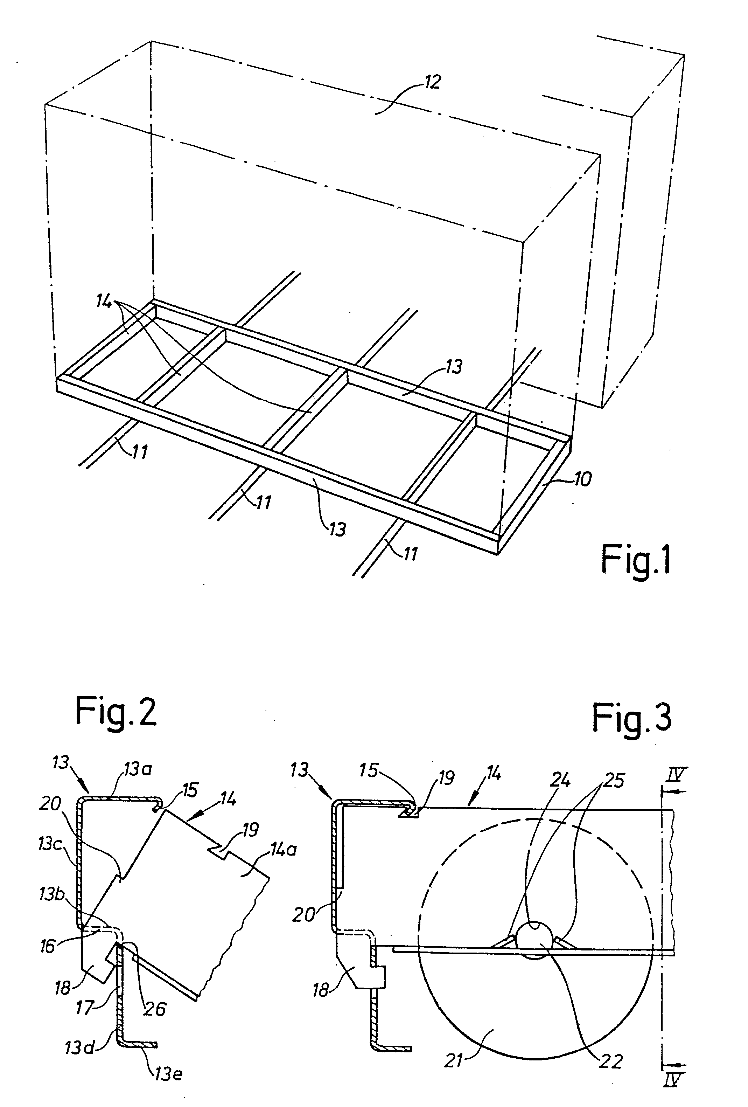

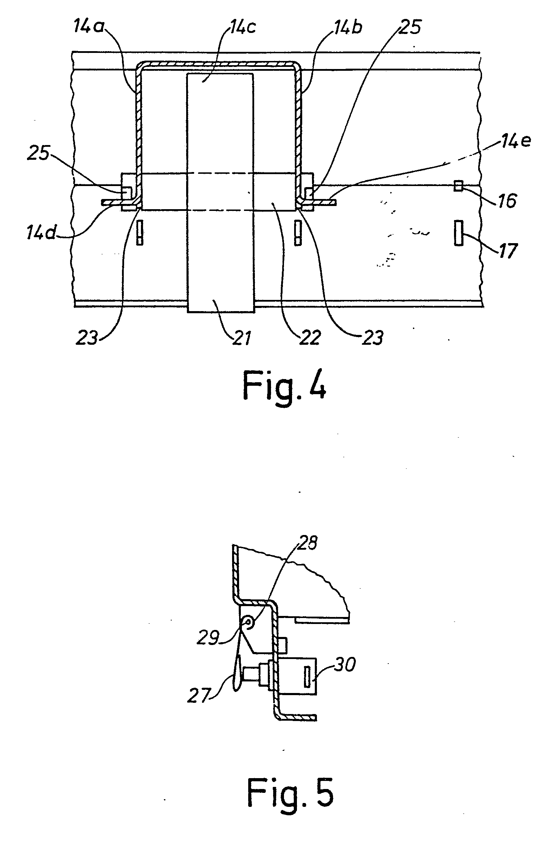

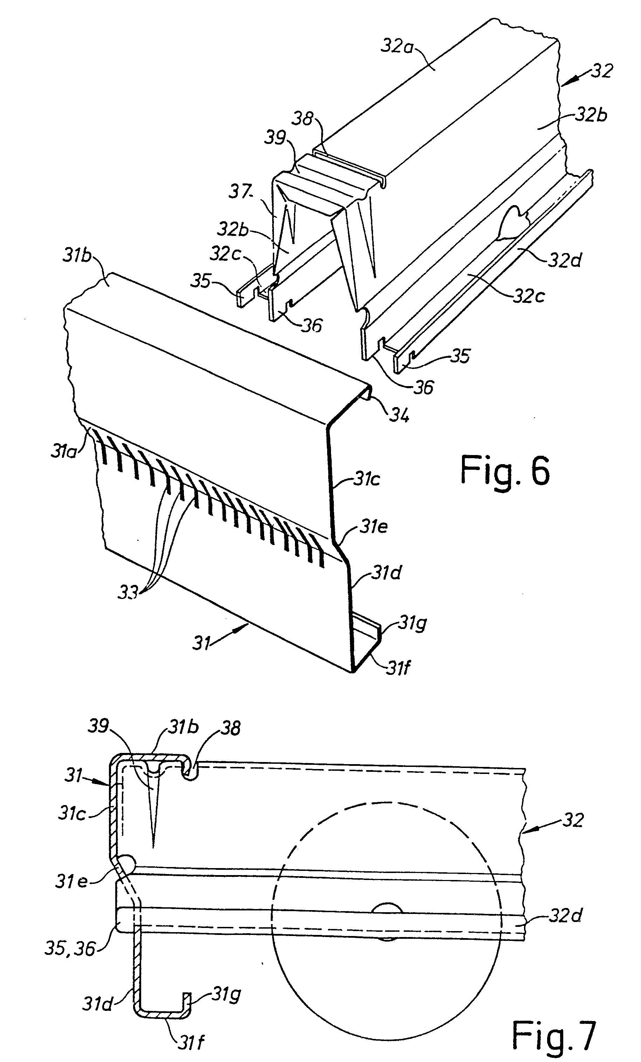

Some embodiments of the invention will now be described in connection with the drawings in which Fig. 1 schematically in a perspective view shows a carriage provided with load-carrying shelves, Fig. 2 in a side elevation view shows the connection between a main beam and a transverse beam before assembly, and Fig. 3 in the same view shows these beams after being assembled. Fig. 4 is a sectional view taken along the line IV—IV in Fig. 3. Fig. 5 shows to an enlarged scale the lower part of the beam in Fig. 3 having a safety device. Fig. 6 is a perspective view of another embodiment of the invention, and Fig. 7 is a side elevation view of the structure shown in Fig. 6 when assembled.

Fig. 1 shows a system to which the invention is to be applied. The system comprises a number of carriages 10 placed adjacent each other. The carriages are moved on wheels on a number of rails 11 in the floor. The carriages support storage shelves 12 and comprise main beams 13 and transverse beams 14 which are connected to each other in a manner which will be described more in detail below.

By moving the carriages towards respectively away from each other one can form passageways between the carriages, whereby the shelves become accessible for depositing and taking out goods.

The beams are made of profile steel sheet having a thickness of 1—4 mm, preferably 2—3 mm.

As appears from Figs. 2—4 each main beam 13 has a partly U-shaped profile with a leg 13a which is extended and at its end has a bent portion 15. The other leg 13b of the profile is via a waist 13c connected to the leg 13a and continues into an L-shaped part, one leg 13d of which is parallel to the waist 13c. The other leg 13e of the L-shaped part is placed straight under and parallel to the extension of the leg 13a of the U-shaped profile. The leg 13e can also be provided with an upwardly bent part, not shown, forming a shelf for cables on the leg 13e. The main beam 13 also has a number of parallel vertical slots. These slots comprise upper slots 16 extending through the short legs 13b of the U-shaped profiles and a short distance down into the vertical legs 13d of the L-shaped profiles, and lower slots 17 each being aligned with an upper slot in a leg 13d.

The transverse beam is U-shaped in section. The section may be slightly tapered in order to make it possible to pile the profiles in each other during transportation. The beam comprises two parallel legs 14a and 14b, respectively, which are joined by a waist 14c. The free ends of the legs 14a and 14b are bent through 90° and form two outwardly extending flanges 14d and 14e, respectively, at either side of the beam. The two ends of the beam are provided with two downwardly extending hooks 18 forming an extension of the legs 14a and 14b, respectively. Perpendicularly grooves 19 extending to the length direction of the transverse beam are provided in the waist 14c. One side of the groove is bevelled in order to safely hold the bent portion 15 of the main beam. At each end of the legs 14a, 14b there is a shoulder 20 the purpose of which will appear from the following. The transverse beams may have a somewhat lower end portion to the left of the groove 19 so that the upper sides of the beams will be in the same plane as the upper sides of the main beams.

The transverse beams enclose a number of wheels 21 which are supported by shafts 22. Each shaft has two grooves 23, co-operating with recesses 24 in the legs 14a, 14b, and is secured by lugs 25 of the flanges 14d and 14e, respectively.

Carriages of the above type are preferably driven by one or several electric motors which in any suitable manner are connected to the wheels.

Joining the beams together to a frame structure takes place in the following manner.

The hooks 18 of a transverse beam 14 are guided through the upper slots 16 in one of the main beams, after which the transverse beam is turned counter-clockwise around a point 26 of abutment between the two beam types. Thereby the bent portion 15 of the leg 13a will be guided along the waist 14c and at the same time be resiliently bent away. When the transverse beam has been turned enough the bent portion 15 falls into the groove 19 and locks the two beams to each other. The shoulder 20 gives a certain degree of spring influence on the waist 13c so that there is no play between the beams after mounting. When all transverse beams 14 have been fastened to one main beam 13 they are fastened to the other main beam by placing their free ends into the main beam, which after turning snaps together with the transverse beams.

Of course it is possible within the scope of the invention first to localize all the transverse beams into the two main beams and then by turning the main beams to join them with the other beams into a complete frame structure.

The frame structure is thereafter completed with the wheels 21 by pressing each wheel shaft 22 with the wheel into the recesses 24 in the legs 14a and 14b against the forces of the lugs 25.

As appears from Fig. 5, the joint described above gives the possibility of easily equipping the carriages with safety devices in the form of a strip along the whole length of the lower part of the carriage. Such strips are commonly used on carriages of the above type in order to prevent injuries if a person should stay between the carriages when they are moved towards each other. The safety strip is denoted by 27 and consists of a bent elongated sheet metal. The strip is in its upper part provided with fastening means 28, formed by a part of the sheet metal, and is supported by a shaft 26. The shaft extends through and between the hooks 18 of a transverse beam. The safety strip 27 with its lower part abuts one or several switches 30 which are connected to the circuit for the drive of the electric motors. Pushing the safety strip inwards causes the motors and thereby the carriages to stop.

The beam joint shown in Figs. 6 and 7 in the same way as the joint described above comprises a main beam 31 and a transverse beam 32. The main beam has a vertical leg 31a continuing into a horizontal leg 31b. The vertical leg is stepped having an upper part 13c and a lower part 31d and a portion 31e connecting these parts. The lower part 31d continues into a flange-shaped part 31f which is parallel to the horizontal leg 31b. The flange-shaped part in turn has an upwardly bent edge portion 31g which is parallel to the vertical leg. Moreover the vertical leg has a number of vertical slots 33 in the area of the portion 31e. The horizontal leg has at its outer end a bent portion 34.

As in the embodiment according to Figs. 1—5, the transverse beam 32 is mainly U-shaped in section. The section is slightly conical and has a waist 32a joining two stepped legs 32b. The legs 32b continue into a part 32c which extends outwards from the plane of symmetry of the beam which in turn continues into a flange 32d, which mainly is parallel to the leg 32b. The flange 32d and the lower parts of the legs 32b have at their ends hooks 35, 36. Outer end parts 37 of the waists and flanges of the beams are bent towards the inner part of the profile in order to make the beam stable. The waist 32a of the beam 32 has near the ends a groove 38 which extends over the complete width of the beam and is perpendicular to its length direction. The groove is intended to co-operate with the bent portion 34 of the main beam. The portion 34 is preferably bent through more than 90° with respect to the horizontal leg. The transverse beam is upset in the area between the groove 38 and the end parts 37 so that a comparatively thick bead 39 is formed which is directed towards the inner part of the profile.

The beams shown in Figs. 6 and 7 are assembled by guiding the hooks 35 and 36 of the transverse beam 32 through the slots 33 in the main beam 31 after which the transverse beam is turned counter-clockwise in Fig. 7. Thereby the horizontal leg 31b with the bent portion 34 at first is pressed upwards in the Figure and when the end of the transverse beam abuts the upper part 31c of the vertical leg of the main beam 31, the bend portion 34 snaps into the groove 38 and locks the beams to each other. When all of the transverse beams have been fastened to one of the main beams, the other main beam is fastened to the transverse beams by localizing the hooks 35, 36 of the free ends of the beams into the slots 33 in the other main beam after which this is turned and the beams thereby snap together.

## Claims

1. Frame structure comprising profiled horizontal main beams and transverse beams, preferably of metal, the wall thickness of the beams being such that the beams are capable of taking up and transmitting considerable loads, such as loads originating from shelves supported on the frame, the transverse beams (14, 32) being secured to the main beams (13, 31) mainly by snap action, each main beam having a mainly vertical leg (13c, 13d, 13a) which has a number of spaced-apart slots (16, 17, 33) extending perpendicular to the length direction of the beam and being intended to receive a respective hook (18, 36) provided on the ends of the transverse beams, characterised in that the leg at least partly abuts one end of the respective transverse beam, each transverse beam being provided at both ends with locking means (19, 38) supplementary to said hooks, and each main beam having snap-acting clamping means which is a part of the beam and which co-operate with the locking means (19, 38) after having been resiliently deflected by the transverse beam during mounting.

2. Frame structure according to Claim 1, characterized in that the transverse beam is U-shaped having its legs extending vertically, whereas the waist is provided with locking means consisting of a groove or the like extending perpendicular to the length direction of the beam, the main beam being provided with a horizontal leg (13a, 31b) intended to abut the waist (14c, 32a) of the transverse beam and at its end having a bent portion (15, 34), which preferably is bent more than 90° with respect to the horizontal leg and forms the clamping means.

3. Frame structure according to Claim 1 or Claim 2, characterized in that the wall thickness of the beams is 1—4 mm, preferably 2—3 mm.

4. Frame structure according to Claim 2 or Claim 3, characterized in that the legs (32b) of each transverse beam continue into a part (32c) which extends outwardly from the plane of symmetry of the beam.

5. Frame structure according to Claim 4, characterized in that the part (32c) extending outwards continues into a flange (32d) which mainly is parallel to the legs (32b) of the transverse beam, each end part of the flange being provided with a hook (35) intended to engage with one of the slots (33) in the corresponding main beam.

6. Frame structure according to any one of Claims 2 to 5 characterized in that the end parts (37) of the legs (32b) and the waist (32a) of the transverse beams are bent towards the inner part of the beam.

7. Frame structure according to any preceding claim, characterized in that the end parts of the transverse beam are reinforced by an upset (39) or the like.

8. Frame structure according to any preceding claim, characterized in that the vertical leg (31a) of each main beam is stepped and continues into a flange-shaped part (31f) which is parallel to a horizontal leg (31b) of the beam.

9. Frame structure according to Claim 8, characterized in that the flange-shaped part (31f) has a bent edge portion (31g) which is mainly parallel to the vertical leg (31a).

10. Method of mounting a frame structure of the type described in Claim 1, characterized in that the hooks of the transverse beam are localized in corresponding slots of the main beam, after which the transverse beam is turned about the point of localization so that a part integral with one of the beams during the turning movement is forced away from the other beam and when the turning has been completed snaps back and locks the beams to each other, that the other transverse beams in the frame structure are fastened to the main beams in the same way, after which the hooks of the other ends of the transverse beams are localized into slots in a second main beam and this beam, after being turned about the point of localization with respect to the frame structure which has been partly mounted, is locked to the transverse beams in the same way as described above.

## Revendications

1. Structure de chassîs comprenant des poutres principales et des poutres transversales horizontales et profilées, de préférence en métal, l'épaisseur de paroi des poutres étant telle que les poutres soient capables de recevoir et de transmettre des charges considérables telles que des charges provenant de rayonnages supportés par le châssis, les poutres transversales (14, 32) étant fixées aux poutres principales (13, 31) principalement par action d'encliquetage, chaque poutre principale ayant une branche essentiellement verticale (13c, 13d, 31a) qui possède un certain nombre de fentes espacées (16, 17, 33) qui s'étendent perpendiculairement à la direction longitudinale de la poutre et sont destinées à recevoir un crochet respectif (18, 36) prévu sur les extrémités des poutres transversales, caractérisée en ce que la branche bute au moins partiellement contre une extrémité de la poutre transversale correspondante, chaque poutre transversale étant munie à ses deux extrémités de moyens de verrouillage (19, 38) en supplément desdits crochets et chaque poutre principale ayant des moyens, de blocage à encliquetage qui font partie de la poutre et qui coopèrent avec les moyens de verrouillage (19, 38) après avoir été fléchis élastiquement par la poutre transversale pendant le montage.

2. Structure de châssis suivant la revendication 1, caractérisée en ce que la poutre transversale est en forme de U, avec ses branches s'étendant verticalement cependant que l'âme est munie de moyens de verrouillage consistant en une rainure ou analogue qui s'étend perpendiculairement à la direction longitudinale de la poutre, la poutre principale étant munie d'une branche horizontale (13a, 31b) qui est destinée à buter contre l'âme (14c, 32a) de la poutre transversale et qui a à son extrémité une portion pliée (15, 34) qui, de préférence, est pliée à plus de 90° par rapport à la branche horizontale et forme les moyens de blocage.

3. Structure de châssis suivant la revendication 1 ou la revendication 2, caractérisée en ce que l'épaisseur de paroi des poutres est de 1 à 4 mm, de préférence de 2 à 3 mm.

4. Structure de châssis suivant la revendication 2 ou la revendication 3, caractérisée en ce que les branches (32b) de chaque poutre transversale se prolongent par une partie (32c) qui s'étend vers l'extérieur en s'éloignant du plan de symétrie de la poutre.

5. Structure de châssis suivant la revendication 4, caractérisée en ce que la partie (32c) qui s'étend vers l'extérieur se prolonge par une aile (32d) qui est principalement parallèle aux branches (32b) de la poutre transversale, chaque partie terminale de l'aile étant munie d'un crochet (35) destiné à coopérer avec l'une des fentes (33) de la poutre principale correspondante.

6. Structure de châssis suivant l'une quelconque des revendications 2 à 5, caractérisée en ce que les parties terminales (37) des branches (32b) et de l'âme (32a) des poutres transversales sont pliées vers la partie intérieure de la poutre.

7. Structure de châssis suivant l'une quelconque des revendications précédentes, caractérisée en ce que les parties terminales de la poutre transversale sont renforcées par un embouti (39) ou analogue.

8. Structure de châssis suivant l'une quelconque des revendications précédentes, caractérisée en ce que la branche verticale (31a) de chaque poutre principale est échelonnée et se prolonge par une partie (31f) en forme d'aile qui est parallèle à une branche horizontale (31b) de la poutre.

9. Structure de châssis suivant la revendication 8, caractérisée en ce que la partie (31f) en forme d'aile comprend une portion marginale pliée (31g) qui est principalement parallèle à la branche verticale (31a).

10. Procédé de montage d'une structure de châssis du type décrit dans la revendication 1, caractérisée en ce qu'on positionne les crochets de la poutre transversale dans des fentes correspondantes de la poutre principale, après quoi on tourne la poutre transversale autour du point de positionnement de sorte que, pendant le mouvement de rotation, une partie qui est d'une seule pièce avec l'une des poutres est repoussée à force dans le sens opposée à l'autre poutre et que, lorsque la rotation a été terminée, elle revient en s'encliquetant et verrouille les poutres l'une à l'autre, en ce qu'on fixe les autres poutres transversales de la structure de châssis aux poutres principales de la même façon, après quoi on positionne les crochets des autres extrémités des poutres transversales dans des fentes d'une deuxième poutre principale et qu'on verrouille cette poutre sur les poutres transversales, après l'avoir tournée autour du point de positionnement par rapport à la structure de châssis qui a été partiellement montée, de la même façon qu'on l'a décrit plus haut.

## Patentansprüche

1. Gerüst mit aus Profilmaterial gebildeten horizontalen Hauptträgern und Querträgern, vorzugsweise aus Metall, deren Wanddicke so stark ist, dass sie zur Aufnahme und Uebertragung grosser Lasten geeignet sind, wie sie bei vom Gerüst getragenen Regalen auftreten, wobei die Querträger (14, 32) im wesentlichen durch Schnappwirkung mit den Hauptträgern (13, 31) verbunden sind, und jeder Hauptträger einen im wesentlichen senkrechten Steg (13c, 13d, 31a) mit einer Anzahl mit Zwischenabstand angeordneter, sich quer zur Längsrichtung des Trägers erstreckender Schlitzen hat, die jeweils zur Aufnahme eines am Ende der Querbalken vorgesehenen Hakens (18, 36) bestimmt sind, dadurch gekennzeichnet, dass der Steg wenigstens teilweise an dem einen Ende des zugeordneten Querträgers anliegt, jeder Querträger an beiden Enden zusätzlich zu den Haken mit Verriegelungsgliedern (19, 38) versehen ist und jeder Hauptträger Einschnappglieder hat, die ein Teil des Trägers sind und mit den Verriegelungsgliedern (19, 38) zusammenwirken, nachdem sie während der Montage durch den Querträger elastisch nachgiebig ausgelenkt worden sind.

2. Gerüst nach Anspruch 1, dadurch gekennzeichnet, dass der Querträger U-förmigen Querschnitt mit sich senkrecht erstreckenden Schenkeln hat, der Mittelsteg mit Verriegelungsgliedern in Form einer Nut oder dergleichen versehen ist, die sich quer zur Längsrichtung des Trägers erstreckt, und der Hauptträger mit einem horizontalen, zur Anlage am Mittelsteg (14c, 32a) des Querträgers bestimmten Schenkel (13a, 31b) ausgebildet ist und an dessen Ende einen umgebogenen Teil (15, 34) hat, der vorzugsweise mit Bezug auf den horizontalen Schenkel um mehr als 90° umgebogen ist und die Einschnappglieder bildet.

3. Gerüst nach Anspruch 1 oder 2, dadurch gekennzeichnet, dass die Wanddicke der Träger 1 bis 4 mm, vorzugsweise 2 bis 3 mm, beträgt.

4. Gerüst nach Anspruch 2 oder 3, dadurch gekennzeichnet, dass die Schenkel (32b) jedes Querträgers in einen sich von der Symmetrieebene des Trägers nach aussen erstreckenden Teil (32c) übergehen.

5. Gerüst nach Anspruch 4, dadurch gekennzeichnet, dass der sich nach aussen erstreckende Teil (32c) in einen Flansch (32d) übergeht, der im wesentlichen parallel zu den Schenkeln (32b) des Querträgers leigt und an jedem Ende mit einem Haken (35) versehen ist, der zum Eingriff in einen der Schlitze (33) des zugeordneten Hauptträgers bestimmt ist.

6. Gerüst nach einem der Ansprüche 2 bis 5, dadurch gekennzeichnet, dass die Endbereiche (37) der Schenkel (32b) und des Mittelstegs (32a) der Querträger zum Inneren des Trägers hin umgebogen sind.

7. Gerüst nach einem der vorhergehenden Ansprüche, dadurch gekennzeichnet, dass die Endbereiche der Querträger durch eine Sicke (39) oder dergleichen verstärkt sind.

8. Gerüst nach einem der vorhergehenden Ansprüche, dadurch gekennzeichnet, dass der senkrechte Steg (31a) jedes Hauptträgers stufenförmig abgesetzt ist, und in einen flanschförmigen Teil (31f) übergeht der parallel zu einem horizontalen Schenkel (31e) des Trägers liegt.

9. Gerüst nach Anspruch 8, dadurch gekennzeichnet, dass der flanschförmige Teil (31f) einen umgebogenen Randbereich (31g) hat, der im wesentlichen parallel zum dem senkrechten Steg (31a) liegt.

10. Verfahren zur Montage eines Gerüstes nach Anspruch 1, dadurch gekennzeichnet, dass die Haken des Querträgers in entsprechende Schlitze des Hauptträgers eingeführt werden, dann der Querträger um den Berührungspunkt der Träger am Schlitz gedreht wird, wobei ein einstückig mit dem einen Träger ausgebildeter Teil während der Drehbewegung zurückschnappt und die Träger miteinander verriegelt, anschliessend die anderen Querträger des Gerüsts in derselben Weise an dem Hauptträger befestigt werden, dann die Haken an den anderen Enden der Querträger in Schlitze eines zweiten Hauptträgers eingeführt werden und schliesslich dieser nach Drehung um den Berührungspunkt relativ zum teilweise montierten Gerüst in der vorstehend beschriebenen Weise mit den Querträgern verriegelt wird.

Fig.1

Fig.2

Fig.3

**Fig.4**

**Fig.5**

0 010 529

Fig. 6

Fig. 7

3